Europäisches Patentamt

European Patent Office

Office européen des brevets

(19)

(11) Veröffentlichungsnummer: **0 069 935**

**A1**

(12) # EUROPÄISCHE PATENTANMELDUNG

(21) Anmeldenummer: **82105911.0**

(51) Int. Cl.³: **G 03 B 23/04**

(22) Anmeldetag: **02.07.82**

(30) Priorität: **10.07.81 DE 3127308**

(43) Veröffentlichungstag der Anmeldung:
**19.01.83 Patentblatt 83/3**

(84) Benannte Vertragsstaaten:
**AT BE CH FR GB IT LI LU NL SE**

(71) Anmelder: **Carl Braun Camera-Werk GmbH**
**Muggenhofer Strasse 122**
**D-8500 Nürnberg 80(DE)**

(72) Erfinder: **Mäusbacher, Rainer**
**Schweriner Strasse 71**
**D-8500 Nürnberg 90(DE)**

(54) Anordnung zum Längsbewegen von Diamagazinen.

(57) Bei einer Anordnung zum Längsbewegen von mit Zahnleisten unterschiedlicher Schrittlänge versehenen Diamagazinen in einer gemeinsamen Magazinführung von Diaprojektoren, bei der die Zahnleisten mit zu einem im Diaprojektor angeordneten stufenförmigen Ritzel verbundenen Zahnkränzen kämmen, ist zur längsbewegbaren Verwendung mehrerer Diamagazine mit unterschiedlicher Schritteilung in einer gemeinsamen Magazinführung mindestens ein Zahnkranz (8''') des Ritzels (8) unterhalb der Stützfläche für die Magazine (4, 5, 6) drehbar und die mit diesem Zahnkranz (8''') kämmende Zahnleiste (6') des zugehörigen Magazins (6) untergreift die Stützfläche.

Fig. 5

Croydon Printing Company Ltd

0069935

CARL BRAUN CAMERA-WERK GMBH, 8500 NÜRNBERG

- 1

## Anordnung zum Längsbewegen von Diamagazinen

Die Erfindung betrifft eine Anordnung zum Längsbewegen von mit Zahnleisten unterschiedlicher Schrittlänge versehenen Diamagazinen in einer gemeinsamen Magazinführung von Diaprojektoren, bei der die Zahnleisten mit zu einem stufenförmigen Ritzel verbundenen Zahnkränzen kämmen.

In bekannter Weise kämmen zum Längsbewegen von zwei Diamagazinen mit Zahnleisten unterschiedlicher Schrittlänge die Zahnleisten mit den Zahnkränzen eines um eine vertikale Achse drehbaren stufenförmigen Ritzels. Die Diamagazine sind hierzu in verschiedenen Ebenen übereinander durch die Magazinführung hindurch bewegbar und für die Durchleitung des Ritzels, für das zuunterst bewegbare Diamagazin bedarf dieses einen Durchführungskanal. Abgesehen davon, daß sich durch die Abstützung der Diamagazine in mehreren Ebenen ein komplizierter Aufbau für den Diaprojektor ergibt, erlaubt das über die Magazinführung vorstehende Ritzel auch keine Wirkverbindung mit einem Rundmagazin. Außerdem ist die Anordnung zusätzlicher Zahnkränze durch die sich ergebende störende Länge des Ritzels über den Boden der Magazinführung ausgeschlossen.

Es ist Aufgabe der Erfindung, mehr als zwei Diamagazine mit Zahnungen unterschiedlicher Schrittteilung in einer gemeinsamen Magazinführung längsbewegbar zu machen.

Diese Aufgabe wird erfindungsgemäß dadurch gelöst, daß mindestens ein Zahnkranz des Ritzels unterhalb der Stützfläche für die Magazine drehbar ist und daß die mit diesem Zahnkranz kämmende Zahnleiste des zugehörigen Magazins die Stützfläche untergreift. Gemäß bevorzugter Ausgestaltung kann die Zahnleiste im Abstand des Magazinbodens an einer Magazinlängsseite über diese vorstehend ausgebildet sein. Auf diese Weise ist erreicht, daß das unterhalb der Magazinführung befindliche Ritzel an einer die übrigen Magazine nicht beeinflußbaren Stelle des Diaprojektors ausgebildet ist und daß bei entsprechender Länge oder Abstand dieses Zahnkranzes zu den übrigen Zahnkränzen Diamagazine beliebiger Ausführung, jedoch in mit dem Zahnkranz entsprechendem Abstand angeordneten Zahnleisten verwendbar sind. Es versteht sich, daß durch Versetzung der Zahnleisten und Anordnung der Zahnkränze Diamagazine mit verschiedenen Schrittteilungen mittels des Ritzels bewegbar sind.

Bevorzugt ist die Stützfläche durch für diese Diamagazine durch im Abstand nebeneinander angeordnete magazinführungsfeste Längsleisten gebildet und die Zahnleisten an den Magazinen dergestalt vorgesehen, daß diese zwischen den Bereich der Längsleisten hindurchgreifen.

- 3 -

Eine besonders einfache Ausgestaltung für den Projektor ergibt sich dann, wenn das Ritzel in oder an Wandungen der Magazinführung gelagert ist. Es versteht sich, daß das Ritzel auch unterhalb der Magazinführung gelagert sein kann.

Die Erfindung ist in der Zeichnung anhand eines Ausführungsbeispiels verdeutlicht. Hierin zeigen:

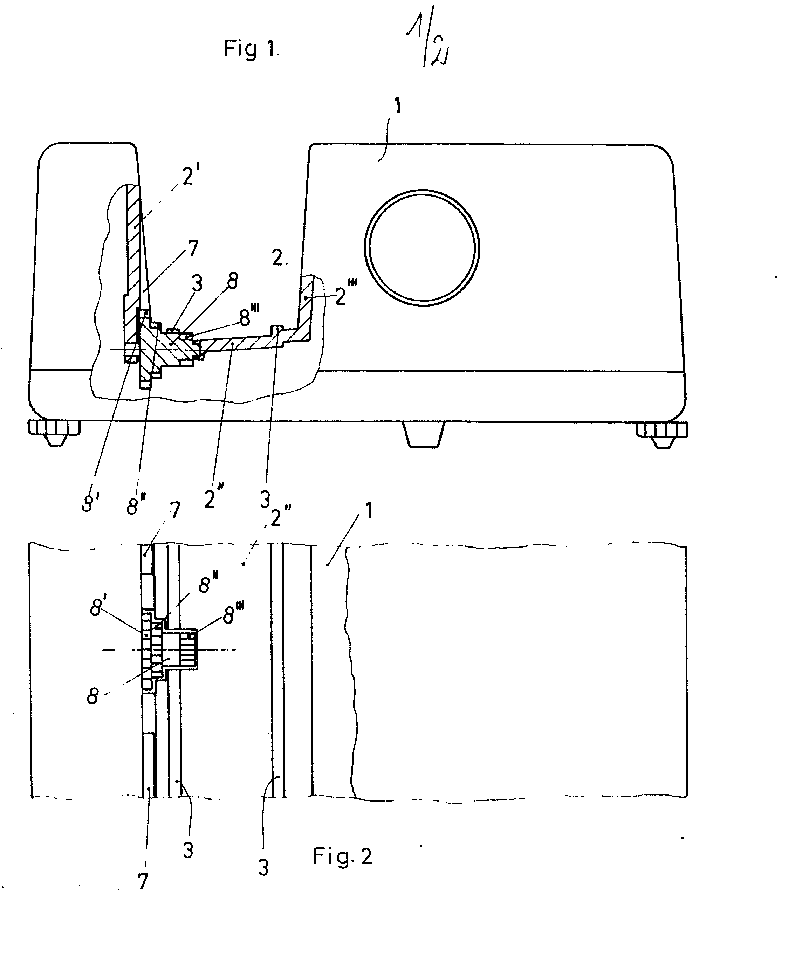

Fig. 1    einen Diaprojektor in Vorderansicht, teilweise im Schnitt,

Fig. 2    ein Teilstück eines Diaprojektors in Draufsicht und

Fig.3- 5 Teilschnitte einer Anordnung.

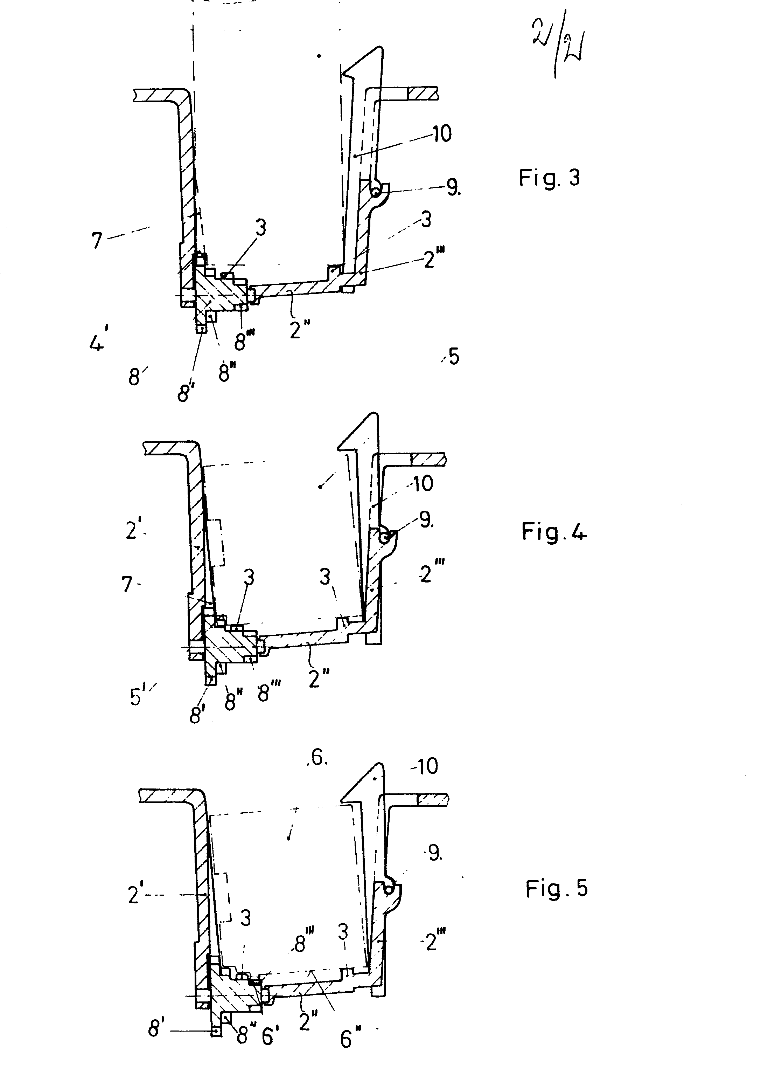

In den Figuren ist mit 1 ein an sich bekannter Diaprojektor bezeichnet, der in einer Magazinführung 2 verschiedene Diamagazine mit Zahnstangen unterschiedlicher Schritteilung aufnehmen soll. Die Magazinführung 2 weist bodenseitig Führungsleisten 3 auf, auf die z. B. ein rundes Diamagazin 4 bzw. flache Diamagazine 5 und 6 aufstellbar sind. Eine seitliche Begrenzungswand 2' der Magazinführung 2 ist mit Anformungen 7 versehen, die das Rundmagazin 4 gegen Herausrollen aus der Magazinführung 2 stützen. Im Bereich des Bodens 2'' der Magazinführung 2 ist ein Stufenritzel 8 drehbeweglich ausgebildet (Fig. 3), dessen Zahnkranz 8' mit der Zahnung 4' des Rundmagazins 4 kämmt, während die Zahnkränze 8'' und 8''' mit Zahnleisten 5' bzw. 6' der Flachmagazine zur Wirkung kommen (Fig. 5, 4). Die Zahnkränze 8', 8'', 8''' weisen verschieden große Schritteilungen auf und sind den Magazinen 4 bis 6 angepaßt.

Erfindungsgemäß erstreckt sich der Zahnkranz 8''' unterhalb der Führungsleisten 3 und die Zahnleiste 6' im Abstand der Bodenfläche des Magazins 6 über dessen Seitenfläche 6''. Die versenkte Anordnung des Zahnkranzes 8''' läßt bei der Benutzung anderer Magazine zunächst einmal keine Störungen für diese zu und macht bei entsprechender Längenausbildung möglich, daß die Zahnleiste 6' mit beliebigem Abstand von der Bodenfläche des Magazins 6 am Magazinkörper angebracht sein kann.

Beim Ausführungsbeispiel ist das Ritzel 8 einstückig.

Die Wand 2''' der Magazinführung 2 nimmt eine bei 9 angelenkte Klinke 10 auf, die die Oberseite von Flachmagazinen zur Niederhaltung derselben übergreift (Fig. 5, 4) und andererseits wie in Fig. 3 dargestellt, bei der Verwendung von Rundmagazinen 4 mit ihrem oberen Ende aus dem Konturenbereich des Rundmagazins zurückgeschwenkt ist.

- 1 -

Patentansprüche :

1. Anordnung zum Längsbewegen von mit Zahnleisten unterschiedlicher Schrittlänge versehenen Diamagazinen in einer gemeinsamen Magazinführung von Diaprojektoren, bei der die Zahnleisten mit zu einem im Diaprojektor angeordneten stufenförmigen Ritzel verbundenen Zahnkränzen kämmen, dadurch gekennzeichnet, daß mindestens ein Zahnkranz (8''') des Ritzels (8) unterhalb der Stützfläche für die Magazine (4, 5, 6) drehbar ist und daß die mit diesem Zahnkranz(8''') kämmende Zahnleiste (6') des zugehörigen Magazins (6) die Stützfläche untergreift.

2. Anordnung nach Anspruch 1, dadurch gekennzeichnet, daß die Zahnleiste (6') im Abstand des Magazinbodens an einer Magazinlängsseite (6'') über diese vorstehend ausgebildet ist.

3. Anordnung nach Anspruch 1, dadurch gekennzeichnet, daß die Stützfläche (3) durch magazinführungsfeste Längsleisten (3) gebildet und die Zahnleiste (6') zwischen den Längsleisten (3) hindurchragend ausgebildet ist.

4. Anordnung nach Anspruch 1, dadurch gekennzeichnet, daß das Ritzel (8) in bzw. an Wandungen der Magazinführung (2) gelagert ist.

Fig 1.

Fig. 2

Fig. 3

Fig. 4

Fig. 5

0069935

2/2

Europäisches
Patentamt

EUROPÄISCHER RECHERCHENBERICHT

0069935
Nummer der Anmeldung

EP 82105911.0

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | G 03 B 23/04 |
| | Keine Entgegenhaltungen | | |

KLASSIFIKATION DER ANMELDUNG (Int. Cl.³)

G 03 B 23/04

RECHERCHIERTE SACHGEBIETE (Int. Cl.³)

G 03 B 23/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 02-11-1982 | KRAL |

EPA form 1503.1   06.78